# EUROPEAN PATENT APPLICATION

(11) **EP 4 794 041 A1**
(43) Date of publication of application: **19.08.2026**
(21) Application number: 24890840.2
(22) Date of filing: 15.11.2024
(51) Int. Cl.: H01M 10/052, H01M 10/0587

(54) **SECONDARY BATTERY AND ELECTROCHEMICAL DEVICE**

(30) Priority: 16.11.2023 CN 202311531457
(71) Applicant: Dongguan Amperex Technology Limited, Dongguan City, Guangdong Province 523000 (CN)
(72) Inventor: FANG, Dekai, Dongguan, Guangdong 523000 (CN)
(74) Representative: Dehns Germany Partnerschaft mbB
(86) International application number: PCT/CN2024/132453
(87) International publication number: WO 2025/103488

(57) **Abstract**

An embodiment of the present application provides a secondary battery and an electrochemical device. The secondary battery includes an electrode assembly, where the electrode assembly is a flat wound structure, the electrode assembly includes a first electrode sheet, a second electrode sheet, and a separator, the separator is disposed between the first electrode sheet and the second electrode sheet, and an innermost electrode sheet of the electrode assembly is the first electrode sheet; where a length of the electrode assembly is denoted as L, a width of the electrode assembly is denoted as W, a thickness of the electrode assembly is denoted as H, meeting 0.9 ≤ L/W ≤ 1.1 and H ≤ 3 mm, the electrode assembly further includes an adhesive layer, an innermost turn of the first electrode sheet includes a first straight segment, a first bent segment, a second straight segment, and a second bent segment connected sequentially, the first electrode sheet has a first surface facing a winding core of the electrode assembly, and at least a portion of the adhesive layer is disposed on the first surface of the first straight segment and/or the first surface of the second straight segment. The technical solution according to some embodiments of the present application can improve the safety performance and cycling performance of the secondary battery.

## Description

### CROSS-REFERENCE TO RELATED APPLICATIONS

The present application claims priority to Chinese Patent Application No. CN2023115314570, filed on November 16, 2023 and entitled "SECONDARY BATTERY AND ELECTROCHEMICAL DEVICE," which is incorporated herein by reference in its entirety.

### TECHNICAL FIELD

The present application relates to the field of secondary battery technologies, and specifically, to a secondary battery and an electrochemical device.

### BACKGROUND

During the winding manufacturing process of an electrode assembly, it is generally required that the electrode sheets of the electrode assembly remain flat to prevent lithium precipitation due to uneven thickness or large cycle expansion caused by uneven stress on the left and right sides of a wide, large, and thin electrode assembly. However, in actual production, the innermost portion of the anode sheet tends to curl after feeding, and the wide, large, and thin electrode assembly is prone to deformation. This phenomenon not only causes significant appearance issues but also results in uneven thickness and interfaces of the electrode assembly, affecting the safety performance and cycling performance of the secondary battery.

During the narrow-side compression test of a secondary battery, it is typically required that the secondary battery does not catch fire or explode. However, due to gaps in the innermost anode sheet and separator in the electrode assembly of a pouch-type winding structure, during the narrow-side compression test of the secondary battery, the innermost anode sheet and the portion wrapping the cathode sheet are prone to short-circuit failure caused by the sharp corners of the anode and cathode, which affects the yield rate.

### SUMMARY

The present application provides a secondary battery and an electrochemical device, which can improve the safety performance and cycling performance of the secondary battery.

The present application is achieved through the following technical solutions:
According to a first aspect, an embodiment of the present application provides a secondary battery including an electrode assembly, where the electrode assembly is a flat wound structure, the electrode assembly includes a first electrode sheet, a second electrode sheet, and a separator, the separator is disposed between the first electrode sheet and the second electrode sheet, and an innermost electrode sheet of the electrode assembly is the first electrode sheet; where a length of the electrode assembly is denoted as L, a width of the electrode assembly is denoted as W, a thickness of the electrode assembly is denoted as H, meeting 0.9 ≤ L/W ≤ 1.1 and H ≤ 3 mm, the electrode assembly further includes an adhesive layer, an innermost turn of the first electrode sheet includes a first straight segment, a first bent segment, a second straight segment, and a second bent segment connected sequentially, the first electrode sheet has a first surface facing a winding core of the electrode assembly, and at least a portion of the adhesive layer is disposed on the first surface of the first straight segment and/or the first surface of the second straight segment.

According to the secondary battery of this embodiment of the present application, the electrode assembly is a flat wound structure, and the length L, width W, and thickness H of the electrode assembly meet 0.9 ≤ L/W ≤ 1.1 and H ≤ 3 mm, making the electrode assembly a wide, large, and thin electrode assembly; the first electrode sheet is the innermost electrode sheet, and thus disposing the adhesive layer on the straight segments of the innermost turn of the first electrode sheet can enhance the strength of the innermost turn of the first electrode sheet, provide support for the electrode assembly, reduce deformation of the electrode assembly, increase the pass rate of the narrow-side compression test of the secondary battery, and enhance the safety performance and cycling performance of the secondary battery.

In one or more optional embodiments, the first electrode sheet has a second surface disposed opposite to the first surface, the first electrode sheet includes a single-sided region and a double-sided region, the single-sided region is provided with an active material only on the second surface, the double-sided region is provided with an active material on both the first surface and the second surface, along a winding direction, the single-sided region and the double-sided region are disposed sequentially, the single-sided region includes a first single-sided region, the first single-sided region is located at the innermost turn of the first electrode sheet, and at least a portion of the adhesive layer is disposed on the first surface of the first single-sided region.

In the above solution, the first single-sided region is located at the innermost turn of the first electrode sheet, and the side of the single-sided region not provided with an active material is the first surface; when the adhesive layer is disposed on the first single-sided region, it can enhance the deformation resistance capability of the portion of the first electrode sheet in the first single-sided region, bond with the inner separator under high-temperature conditions, enhance the strength of the inner turn of the electrode assembly, reduce the probability of deformation of the electrode assembly, and prevent short-circuit failure caused by the sharp corners of the anode and cathode sheets in the inner turn of the electrode assembly due to narrow-side compression.

In one or more optional embodiments, an area of the first single-sided region covered by the adhesive layer is denoted as S1, an area of the first single-sided region is denoted as S2, and 1/2 ≤ S1/S2 ≤ 1.

In the above solution, a ratio of the area of the first single-sided region covered by the adhesive layer to the area of the first single-sided region meets the above relationship, ensuring a large bonding area between the adhesive layer and the first single-sided region, enhancing the strength of the first single-sided region, and reducing the probability of deformation of the electrode assembly.

In one or more optional embodiments, 2/3 ≤ S1/S2 ≤ 1.

In the above solution, when 2/3 ≤ S1/S2 ≤ 1, the strength of the first single-sided region can be enhanced, and the probability of deformation of the electrode assembly can be reduced.

In one or more optional embodiments, along a thickness direction of the electrode assembly, an orthographic projection of the adhesive layer covers the entire second straight segment.

In the above solution, the orthographic projection of the adhesive layer covers the entire second straight segment, which can enable the innermost turn of the first electrode sheet to have high strength and increase the pass rate of the narrow-side compression test.

In one or more optional embodiments, a portion of the adhesive layer is disposed on the first bent segment and/or the second bent segment.

In the above solution, disposing a portion of the adhesive layer on the first bent segment and/or the second bent segment can further enhance the overall strength of the innermost turn of the first electrode sheet, reduce the risk of brittle fracture of the first electrode sheet, and further increase the pass rate of the narrow-side compression test.

In one or more optional embodiments, at least a portion of the adhesive layer is disposed on the first straight segment, the first bent segment, the second straight segment, and the second bent segment.

In the above solution, disposing the adhesive layer on the first straight segment, the first bent segment, the second straight segment, and the second bent segment can enhance the portion of the first electrode sheet in the innermost turn, effectively reduce the probability of deformation of the electrode assembly and increase the pass rate of the narrow-side compression test.

In one or more optional embodiments, the adhesive layer includes a first adhesive sub-layer and a second adhesive sub-layer spaced apart along a winding direction, where at least a portion of the first adhesive sub-layer is disposed on the first straight segment, and at least a portion of the second adhesive sub-layer is disposed on the second straight segment.

In the above solution, the first adhesive sub-layer and the second adhesive sub-layer are two independent portions, which can reduce the process difficulty of bonding the first adhesive sub-layer and the second adhesive sub-layer to the first surface, and ensure firm bonding between the first adhesive sub-layer and the second adhesive sub-layer and the first surface.

In one or more optional embodiments, along the thickness direction of the electrode assembly, an orthographic projection of the first adhesive sub-layer and an orthographic projection of the second adhesive sub-layer have an overlapping region.

In the above solution, the orthographic projection of the first adhesive sub-layer and the orthographic projection of the second adhesive sub-layer have an overlapping region, which can increase a bonding area between the adhesive layer and the separator, and can also enhance the bonding effect of the inner turn of the wide, large, and thin electrode assembly.

In one or more optional embodiments, the first adhesive sub-layer includes a first portion and a second portion connected to each other, where the first portion is disposed on the first straight segment, the second portion is disposed on the second bent segment; and the second adhesive sub-layer includes a third portion and a fourth portion connected to each other, where the third portion is disposed on the second straight segment, and the fourth portion is disposed on the first bent segment.

In the above solution, the first portion and the second portion are connected to each other, the first portion is located on the first straight segment, and the second portion is located on the second bent segment, which can reduce the risk of brittle fracture of the first electrode sheet at the second bent segment; the third portion and the fourth portion are connected to each other, the third portion is located on the second straight segment, and the fourth portion is located on the first bent segment, which can reduce the risk of brittle fracture of the first electrode sheet at the first bent segment.

In one or more optional embodiments, the first electrode sheet includes a single-sided region and a double-sided region, where the single-sided region is provided with an active material only on one side, the double-sided region is provided with an active material on both sides, along a winding direction, the single-sided region and the double-sided region are disposed sequentially, a trailing end of the adhesive layer is a first end, the double-sided region includes a second end connected to the single-sided region, and in an unfolded state of the first electrode sheet, along a length direction of the first electrode sheet, a distance between the first end and the second end is denoted as D1, meeting 0 ≤ D1 ≤ 2 mm.

In the above solution, the distance between the first end and the second end meeting the above relationship can reduce the risk of the adhesive layer overlapping with the active material of the double-sided region, thereby reducing the risk of lithium precipitation.

In one or more optional embodiments, a thickness of the adhesive layer is 10 µm to 60 µm.

In the above solution, a thickness direction of the adhesive layer is parallel to a thickness direction of the first electrode sheet, and the thickness of the adhesive layer meeting the above relationship can reduce the probability of deformation of the innermost turn of the first electrode sheet, increase the pass rate of the narrow-side compression test, occupy less assembly space, and reduce the impact on energy density.

In one or more optional embodiments, the adhesive layer includes a pressure-sensitive adhesive layer, a substrate layer, and a hot-melt adhesive layer sequentially distributed along a thickness direction of the adhesive layer, where the hot-melt adhesive layer is connected to the separator, and the pressure-sensitive adhesive layer is connected to the first electrode sheet.

In the above solution, the pressure-sensitive adhesive layer is connected to the first electrode sheet, and the hot-melt adhesive layer is connected to the separator, which can ensure firm connection between the first electrode sheet and the separator, enhance the strength of the inner turn of the electrode assembly, and reduce the probability of deformation of the electrode assembly.

In one or more optional embodiments, along a winding axis direction of the electrode assembly, the adhesive layer extends beyond an edge of the first electrode sheet, and a dimension C by which the adhesive layer extends beyond the edge of the first electrode sheet meets 0 ≤ C ≤ 0.75 mm.

In the above solution, the dimension by which the adhesive layer extends beyond the edge of the first electrode sheet meets the above range, which can not only fully cover the first electrode sheet in the winding axis direction of the electrode assembly to meet bonding requirements, but also reduce the impact on the assembly of the secondary battery.

In one or more optional embodiments, in an unfolded state of the first electrode sheet, along a length direction of the first electrode sheet, a distance between the adhesive layer and a winding starting end of the first electrode sheet is denoted as D2, meeting 1 mm ≤ D2 ≤ 2 mm.

In the above solution, the distance between the adhesive layer and the winding starting end of the first electrode sheet meeting the above relationship facilitates feeding of the first electrode sheet during winding of the electrode assembly and can cover burrs at the winding starting end, improving the safety performance of the secondary battery.

In one or more optional embodiments, the first electrode sheet has a second surface disposed opposite to the first surface, the first electrode sheet includes a single-sided region and a double-sided region, the single-sided region is provided with an active material only on the second surface, the double-sided region is provided with an active material on both the first surface and the second surface, along the winding direction, the single-sided region and the double-sided region are disposed sequentially, the separator includes a first separator and a second separator, the first separator is disposed facing the second surface, the second separator is disposed facing the first surface, at least a portion of the adhesive layer is disposed between the single-sided region and the second separator, and the single-sided region and the second separator are bonded through the adhesive layer.

In the above solution, at least a portion of the adhesive layer is disposed between the single-sided region and the second separator, and the single-sided region and the second separator are bonded through the adhesive layer, which contributes to enhancing the strength of the inner turn of the electrode assembly, reducing the probability of deformation of the electrode assembly, and increasing the pass rate of the narrow-side compression test.

In one or more optional embodiments, a winding starting end of the first separator and a winding starting end of the second separator are both bent structures.

In the above solution, the winding starting end of the first separator and the winding starting end of the second separator are both bent structures, which facilitates clamping by a winding needle during winding of the electrode assembly.

In one or more optional embodiments, the secondary battery further includes a packaging pouch, and the electrode assembly is accommodated within the packaging pouch.

In the above solution, the electrode assembly is accommodated within the packaging pouch, which can protect the electrode assembly, and a wall thickness of the packaging pouch can be relatively thin, enabling the secondary battery to have a higher energy density.

In one or more optional embodiments, L ≥ 65 mm, and W ≥ 65 mm.

In the above solution, when L ≥ 65 mm and W ≥ 65 mm, the electrode assembly is a wide, large, and thin electrode assembly, and the provision of the adhesive layer can effectively reduce deformation of the electrode assembly, and increase the pass rate of the narrow-side compression test of the secondary battery.

According to a second aspect, an embodiment of the present application provides an electrochemical device including the secondary battery according to any one of the above embodiments.

Additional aspects and advantages of the present application will be partially set forth in the following description, and some will become apparent from the following description or through practice of the present application.

### BRIEF DESCRIPTION OF DRAWINGS

To more clearly illustrate the technical solutions of some embodiments of the present application, the accompanying drawings required for use in these embodiments will be briefly introduced below. It should be understood that the following drawings only show certain embodiments of the present application and should not be regarded as limiting the scope. For those skilled in the art, other related drawings can be obtained based on these drawings without creative effort.
FIG. 1 is a schematic structural diagram of a secondary battery according to some embodiments of the present application;
FIG. 2 is a bottom view of the secondary battery shown in FIG. 1;
FIG. 3 is a schematic structural diagram of an electrode assembly according to some embodiments of the present application;
FIG. 4 is a schematic structural diagram of an electrode assembly according to some other embodiments of the present application;
FIG. 5 is a schematic structural diagram of an electrode assembly according to further embodiments of the present application;
FIG. 6 is a schematic structural diagram of an electrode assembly according to yet some other embodiments of the present application;
FIG. 7 is a schematic structural diagram of an electrode assembly according to still some other embodiments of the present application;
FIG. 8 is a schematic structural diagram of an electrode assembly according to yet some other embodiments of the present application;
FIG. 9 is a schematic diagram of an adhesive layer and a single-sided region in an unfolded state of a first electrode sheet according to some embodiments of the present application;
FIG. 10 is a schematic structural diagram of an adhesive layer according to some embodiments of the present application;
FIG. 11 is a schematic diagram of the assembly of an adhesive layer and a first electrode sheet according to some embodiments of the present application;
FIG. 12 is a schematic structural diagram of an adhesive layer and a winding starting end of a first electrode sheet in an unfolded state according to some other embodiments of the present application; and
FIG. 13 is a partial enlarged view of portion A in FIG. 8.

Reference signs: 100. secondary battery; 10. electrode assembly; 10a. straight region; 10b. bent region; 11. first electrode sheet; 11a. first surface; 11b. second surface; 111. first straight segment; 112. first bent segment; 113. second straight segment; 114. second bent segment; 115. single-sided region; 115a. first single-sided region; 116. double-sided region; 116a. second end; 12. second electrode sheet; 13. separator; 131. first separator; 132. second separator; 20. adhesive layer; 20a. first end; 20b. third end; 21. first adhesive sub-layer; 211. first portion; 212. second portion; 22. second adhesive sub-layer; 221. third portion; 222. fourth portion; 23. pressure-sensitive adhesive layer; 24. substrate layer; 25. hot-melt adhesive layer; 30. packaging pouch; J. winding direction; P. winding starting end of first electrode sheet; X. winding axis direction of electrode assembly; Y. length direction of first electrode sheet; and Z. thickness direction of electrode assembly.

### DESCRIPTION OF EMBODIMENTS

To make the objectives, technical solutions, and advantages of some embodiments of the present application clearer, the technical solutions in these embodiments of the present application will be described clearly and completely below with reference to the accompanying drawings in these embodiments of the present application. It is apparent that the described embodiments are some, but not all, embodiments of the present application.

Unless otherwise defined, all technical and scientific terms used in the present application have the same meaning as commonly understood by those skilled in the technical field of the present application; the terms used in the specification of the present application are for the purpose of describing specific embodiments only and are not intended to limit the present application; the terms "include" and "have" in the specification, claims, and the above drawings of the present application, as well as any variations thereof, are intended to cover non-exclusive inclusion. The terms "first," "second," and the like in the specification, claims, or the above drawings of the present application are used to distinguish different objects, not to describe a specific order or priority.

Reference to "embodiment" in the present application means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that some embodiments described in the present application can be combined with other embodiments.

In the description of the present application, it should be noted that, unless otherwise expressly specified and limited, the terms "installation," "connection," " linkage," and "attachment" should be understood in a broad sense, for example, as a fixed connection, a detachable connection, or an integral connection; a direct connection, an indirect connection through an intermediate medium, or an internal communication between two components. For those skilled in the art, the specific meanings of the above terms in the present application can be understood based on specific circumstances.

The term "and/or" in the present application is merely an association relationship describing associated objects, indicating that three relationships may exist, for example, A and/or B may indicate: A alone, A and B simultaneously, and B alone. Additionally, the character "/" in the present application generally indicates that the associated objects before and after it are in an "or" relationship.

The term "multiple" in the present application refers to two or more (including two), similarly, "multiple groups" refers to two or more groups (including two groups), and "multiple pieces" refers to two or more pieces (including two pieces).

When the electrode assembly is a flat wound structure, a narrow-side compression test needs to be performed on the secondary battery during the manufacturing process of the secondary battery. However, for the wide, large, and thin electrode assembly of a pouch-type secondary battery, during the narrow-side compression test, the innermost anode sheet is prone to brittle fracture, leading to short-circuiting contact between the anode and cathode sheets, and resulting in a low pass rate for the narrow-side compression test, which affects the safety performance and cycling performance of the secondary battery.

The structure of the secondary battery according to some embodiments of the present application will be described below with reference to the accompanying drawings.

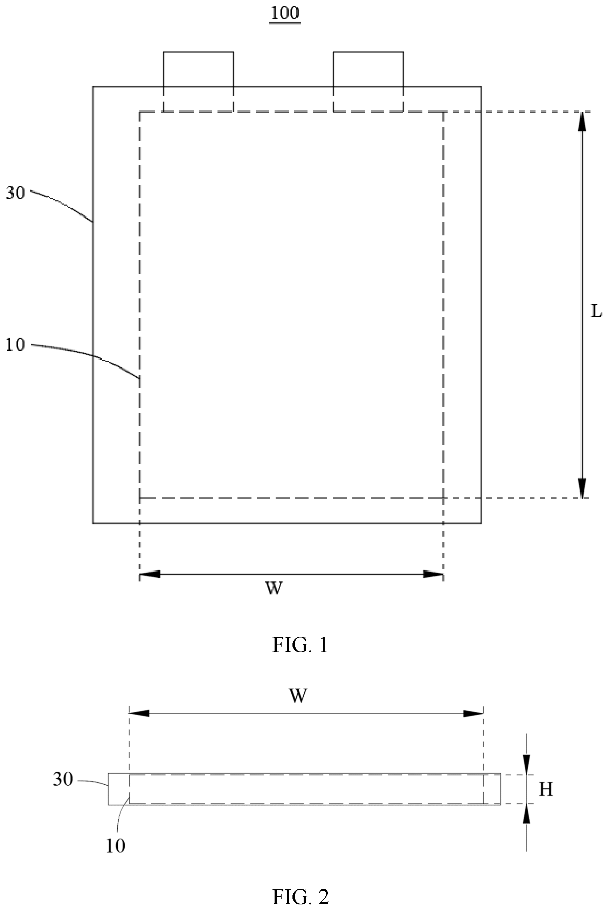

Referring to FIGs. 1 to 5, an embodiment of the present application provides a secondary battery 100, where the secondary battery 100 includes an electrode assembly 10, and the electrode assembly 10 is a flat wound structure.

The flat shape refers to the electrode assembly 10 having a shape with a straight region 10a and two bent regions 10b, the two bent regions 10b being located at both ends of the straight region 10a.

The electrode assembly 10 includes a first electrode sheet 11, a second electrode sheet 12, and a separator 13, where the separator 13 is disposed between the first electrode sheet 11 and the second electrode sheet 12, and an innermost electrode sheet of the electrode assembly 10 is the first electrode sheet 11.

A length of the electrode assembly 10 is denoted as L, a width of the electrode assembly 10 is denoted as W, and a thickness of the electrode assembly 10 is denoted as H, meeting 0.9 ≤ L/W ≤ 1.1 and H ≤ 3 mm.

The electrode assembly 10 further includes an adhesive layer 20, the innermost turn of the first electrode sheet 11 includes a first straight segment 111, a first bent segment 112, a second straight segment 113, and a second bent segment 114 connected sequentially, the first electrode sheet 11 has a first surface 11a facing a winding core of the electrode assembly 10, and at least a portion of the adhesive layer 20 is disposed on the first surface 11a of the first straight segment 111 and/or the first surface 11a of the second straight segment 113.

The first straight segment 111 and the second straight segment 113 are portions of the innermost turn of the first electrode sheet 11 located in the straight region 10a, and the first bent segment 112 and the second bent segment 114 are portions of the innermost turn of the first electrode sheet 11 located in the bent region 10b.

The innermost electrode sheet of the electrode assembly 10 is an electrode sheet closest to the winding core among the electrode sheets constituting the electrode assembly 10.

The first electrode sheet 11 and the second electrode sheet 12 have opposite polarities. The first electrode sheet 11 may be an anode sheet, and correspondingly, the second electrode sheet 12 may be a cathode sheet.

The separator 13 is disposed between the first electrode sheet 11 and the second electrode sheet 12 to insulate and isolate the first electrode sheet 11 from the second electrode sheet 12.

The length L, width W, and thickness H of the electrode assembly 10 meet 0.9 ≤ L/W ≤ 1.1 and H ≤ 3 mm, making the electrode assembly 10 a wide, large, and thin structure, and the secondary battery 100 formed by the electrode assembly 10 is a wide, large, and thin battery.

In some embodiments, L ≥ 65 mm, and W ≥ 65 mm.

The innermost turn of the first electrode sheet 11 refers to the structure formed starting from a winding starting end P of the first electrode sheet, along a winding direction J of the first electrode sheet 11, and ending at a point aligned with the winding starting end.

Since the electrode assembly 10 is a flat wound structure, the winding starting end P of the first electrode sheet is in the first straight segment 111, and the first straight segment 111 includes two segments, where one end of a first segment serves as the winding starting end, the other end of the first segment is connected to the first bent segment 112, one end of a second segment is connected to the second bent segment 114, and the other end of the second segment is aligned with the winding starting end P of the first electrode sheet in a thickness direction Z of the electrode assembly.

The adhesive layer 20 is disposed on the first surface 11a and can bond with the first surface 11a, ensuring a firm connection between the adhesive layer 20 and the first electrode sheet 11.

"At least a portion of the adhesive layer 20 is disposed on the first surface 11a of the first straight segment 111 and/or the first surface 11a of the second straight segment 113" means that at least a portion of the adhesive layer 20 may be disposed on the first surface 11a of the first straight segment 111, or at least a portion of the adhesive layer 20 may be disposed on the first surface 11a of the second straight segment 113, or at least a portion of the adhesive layer 20 is disposed on both the first surface 11a of the first straight segment 111 and the first surface 11a of the second straight segment 113.

The Provision of the adhesive layer 20 can enhance the strength of the first straight segment 111 and/or the second straight segment 113.

During the winding and forming process of the electrode assembly 10, the adhesive layer 20 is first applied to the first electrode sheet 11, and then the first electrode sheet 11 with the adhesive layer 20 is fed for winding.

According to the secondary battery 100 of this embodiment of the present application, the first electrode sheet 11 is the innermost electrode sheet, and thus disposing the adhesive layer 20 on the straight segments of the innermost turn of the first electrode sheet 11 can enhance the strength of the innermost turn of the first electrode sheet 11, provide support to the electrode assembly 10, reduce deformation of the electrode assembly 10, increase the pass rate of the narrow-side compression test of the secondary battery 100, and enhance the safety performance and cycling performance of the secondary battery 100.

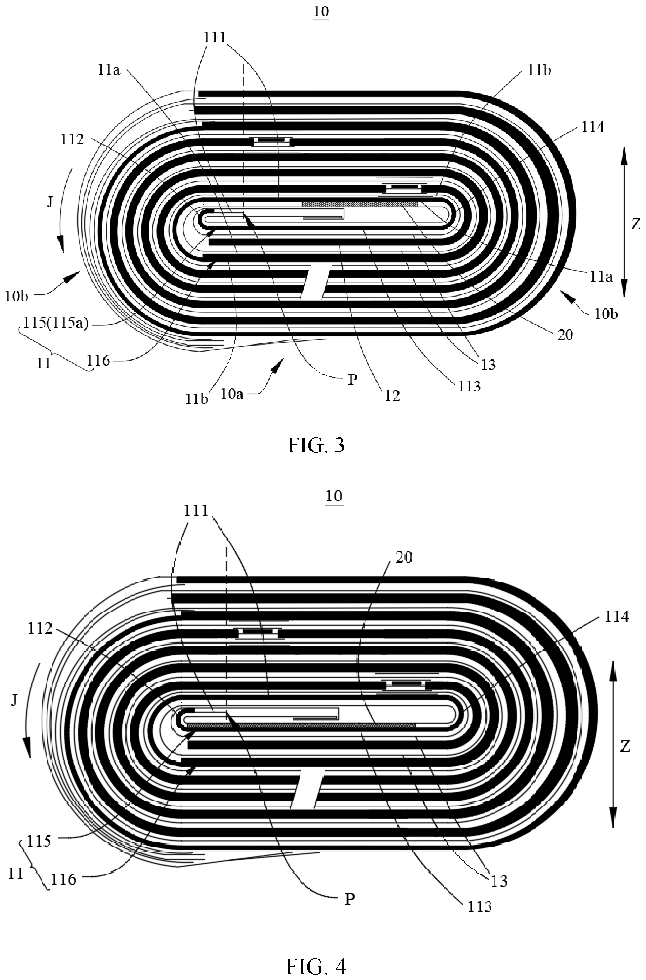

Referring to FIGs. 3 to 5, in one or more optional embodiments, the first electrode sheet 11 has a second surface 11b disposed opposite to the first surface 11a, the first electrode sheet 11 includes a single-sided region 115 and a double-sided region 116, the single-sided region 115 is provided with an active material only on the second surface 11b, the double-sided region 116 is provided with an active material on both the first surface 11a and the second surface 11b, along the winding direction J, the single-sided region 115 and the double-sided region 116 are disposed sequentially, the single-sided region 115 includes a first single-sided region 115a, the first single-sided region 115a is located at the innermost turn of the first electrode sheet 11, and at least a portion of the adhesive layer 20 is disposed on the first surface 11a of the first single-sided region 115a.

The single-sided region 115 is a region of the first electrode sheet 11 where an active material is provided on only one side in the thickness direction, and the double-sided region 116 is a region of the first electrode sheet 11 where an active material is provided on both sides in the thickness direction.

Along the winding direction J, the single-sided region 115 and the double-sided region 116 are disposed sequentially, with the single-sided region 115 being closer to the winding starting end than the double-sided region 116.

The first single-sided region 115a being located at the innermost turn of the first electrode sheet 11 may mean that a portion of the single-sided region 115 is located at the innermost turn of the first electrode sheet 11, or the entirety of the single-sided region 115 is located at the innermost turn of the first electrode sheet 11.

A portion of the adhesive layer 20 may be disposed on the first single-sided region 115a, or the entirety of the adhesive layer 20 may be disposed on the first single-sided region 115a.

For example, when the region of the first electrode sheet 11 near the winding starting end includes a bare foil region, the bare foil region, the single-sided region 115, and the double-sided region 116 are distributed sequentially along the winding direction J, a portion of the adhesive layer 20 may be located in the bare foil region, and another portion may be disposed on the single-sided region 115. Alternatively, when the region of the first electrode sheet 11 near the winding starting end does not include a bare foil region, the entirety of the adhesive layer 20 may be disposed on the single-sided region 115.

In the above solution, the first single-sided region 115a is located at the innermost turn of the first electrode sheet 11, and the side of the single-sided region 115 not provided with an active material is the first surface 11a. When the adhesive layer 20 is disposed on the first single-sided region 115a, it can enhance the deformation resistance capability of the portion of the first electrode sheet 11 in the first single-sided region 115a, bond with the inner separator 13 under high-temperature conditions, enhance the strength of the inner turn of the electrode assembly 10, reduce the probability of deformation of the electrode assembly 10, and prevent short-circuit failure caused by the sharp corners of the anode and cathode sheets in the inner turn of the electrode assembly 10 due to narrow-side compression.

In one or more optional embodiments, an area of the first single-sided region 115a covered by the adhesive layer 20 is denoted as S1, an area of the first single-sided region 115a is denoted as S2, and 1/2 ≤ S1/S2 ≤ 1.

Optionally, S1/S2 may be, but is not limited to, 1/2, 2/3, 3/4, 4/5, 5/6, 6/7, 7/8, 8/9, 9/10, or 1.

In the above solution, a ratio of the area of the first single-sided region 115a covered by the adhesive layer 20 to the area of the first single-sided region 115a meets the above relationship, ensuring a large bonding area between the adhesive layer 20 and the first single-sided region 115a, enhancing the strength of the first single-sided region, and reducing the probability of deformation of the electrode assembly 10, but when S1 > S2, energy density is lost.

In one or more optional embodiments, 2/3 ≤ S1/S2 ≤ 1.

In the above solution, when 2/3 ≤ S1/S2 ≤ 1, the strength of the first single-sided region 115a can be enhanced, the probability of deformation of the electrode assembly 10 can be reduced.

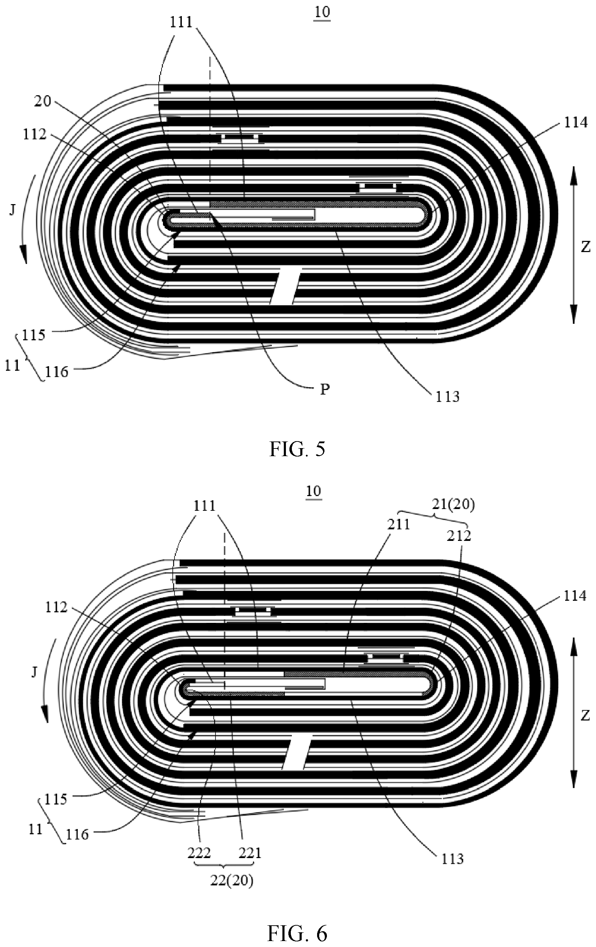

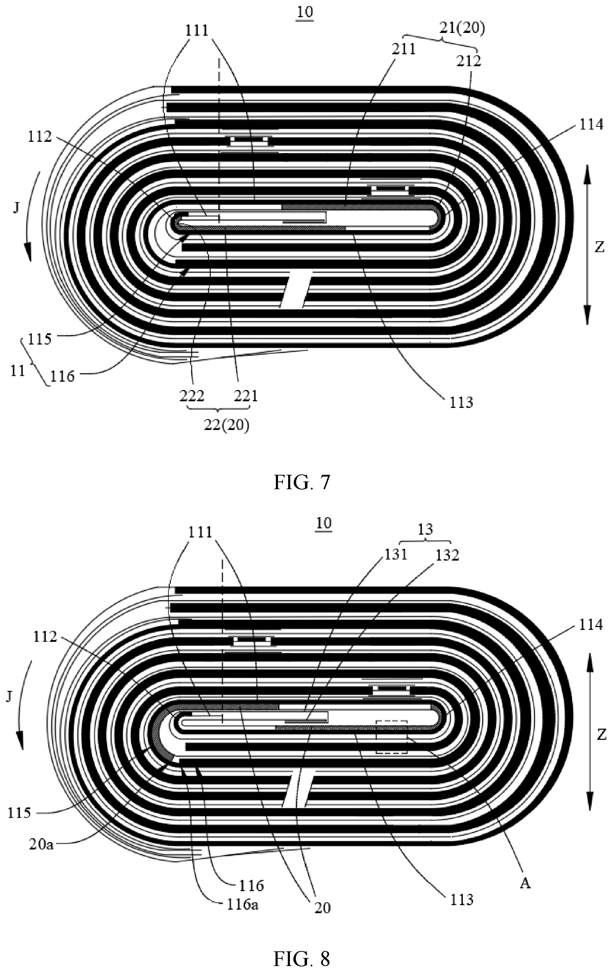

Referring to FIG. 5, and further referring to FIGs. 6 and 7, in one or more optional embodiments, along the thickness direction Z of the electrode assembly, an orthographic projection of the adhesive layer 20 covers the entire second straight segment 113.

The orthographic projection of the adhesive layer 20 covering the entire second straight segment 113 may mean that the adhesive layer 20 is disposed on the second straight segment 113, or the adhesive layer 20 is disposed on the first straight segment 111, or the adhesive layer 20 is disposed on both the first straight segment 111 and the second straight segment 113. When the adhesive layer 20 is disposed on both the first straight segment 111 and the second straight segment 113, the adhesive layer 20 on the first straight segment 111 may cover a portion of the first straight segment 111, and the adhesive layer 20 on the second straight segment 113 may cover a portion of the second straight segment 113; or the adhesive layer 20 on the first straight segment 111 may cover the entire first straight segment 111, and the adhesive layer 20 on the second straight segment 113 may cover a portion of the second straight segment 113; or the adhesive layer 20 on the first straight segment 111 may cover a portion of the first straight segment 111, and the adhesive layer 20 on the second straight segment 113 may cover the entire second straight segment 113; or the adhesive layer 20 on the first straight segment 111 may cover the entire first straight segment 111, and the adhesive layer 20 on the second straight segment 113 may cover the entire second straight segment 113.

In the above solution, the orthographic projection of the adhesive layer 20 covers the entire second straight segment 113, which enables the innermost turn of the first electrode sheet 11 to have high strength and can increase the pass rate of the narrow-side compression test.

Referring to FIGs. 5 to 7, in one or more optional embodiments, a portion of the adhesive layer 20 is disposed on the first bent segment 112 and/or the second bent segment 114.

A portion of the adhesive layer 20 may be disposed on the first bent segment 112, which can enhance the strength of the first bent segment 112 and reduce the risk of brittle fracture of the first electrode sheet 11 at the first bent segment 112.

A portion of the adhesive layer 20 may be disposed on the second bent segment 114, which can enhance the strength of the second bent segment 114 and reduce the risk of brittle fracture of the first electrode sheet 11 at the second bent segment 114.

A portion of the adhesive layer 20 may be disposed on both the first bent segment 112 and the second bent segment 114, which can enhance the strength of both the first bent segment 112 and the second bent segment 114 and reduce the risk of brittle fracture of the first electrode sheet 11 at the first bent segment 112 and the second bent segment 114.

In the above solution, disposing a portion of the adhesive layer 20 on the first bent segment 112 and/or the second bent segment 114 can further enhance the overall strength of the innermost turn of the first electrode sheet 11, reduce the risk of brittle fracture of the first electrode sheet 11, and further increase the pass rate of the narrow-side compression test.

Referring to FIG. 5, in one or more optional embodiments, at least a portion of the adhesive layer 20 is disposed on the first straight segment 111, the first bent segment 112, the second straight segment 113, and the second bent segment 114.

The adhesive layer 20 may be a continuous structure, and the adhesive layer 20 may be disposed sequentially on the first straight segment 111, the first bent segment 112, the second straight segment 113, and the second bent segment 114, meaning that the adhesive layer 20 may be disposed on the entire innermost turn of the first electrode sheet 11.

In some embodiments, a portion of the adhesive layer 20 may be disposed on the innermost turn of the first electrode sheet 11, and another portion of the adhesive layer 20 may be disposed on the next inner turn of the first electrode sheet 11.

In the above solution, disposing the adhesive layer 20 on the first straight segment 111, the first bent segment 112, the second straight segment 113, and the second bent segment 114 can enhance the portion of the first electrode sheet 11 in the innermost turn, effectively reduce the probability of deformation of the electrode assembly 10, and increase the pass rate of the narrow-side compression test.

Referring to FIGs. 6 and 7, in one or more optional embodiments, the adhesive layer 20 includes a first adhesive sub-layer 21 and a second adhesive sub-layer 22 spaced apart along the winding direction J, where at least a portion of the first adhesive sub-layer 21 is disposed on the first straight segment 111, and at least a portion of the second adhesive sub-layer 22 is disposed on the second straight segment 113.

The first adhesive sub-layer 21 and the second adhesive sub-layer 22 are spaced apart along the winding direction J, and the first adhesive sub-layer 21 and the second adhesive sub-layer 22 are two mutually independent portions.

At least a portion of the first adhesive sub-layer 21 is disposed on the first straight segment 111, which may be in the following cases: a portion of the first adhesive sub-layer 21 is disposed on the first straight segment 111, and another portion is disposed on the first bent segment 112 and/or the second bent segment 114; or the entirety of the first adhesive sub-layer 21 is disposed on the first straight segment 111.

At least a portion of the second adhesive sub-layer 22 is disposed on the second straight segment 113, which may be in the following cases: a portion of the second adhesive sub-layer 22 is disposed on the second straight segment 113, while another portion is disposed on the first bent segment 112 and/or the second bent segment 114; or the entirety of the second adhesive sub-layer 22 is disposed on the second straight segment 113.

In the above solution, the first adhesive sub-layer 21 and the second adhesive sub-layer 22 are two independent portions, which can reduce the process difficulty of bonding the first adhesive sub-layer 21 and the second adhesive sub-layer 22 to the first surface 11a, and ensure firm bonding between the first adhesive sub-layer 21 and the second adhesive sub-layer 22 and the first surface 11a.

Referring to FIG. 7, in one or more optional embodiments, along the thickness direction Z of the electrode assembly, an orthographic projection of the first adhesive sub-layer 21 and an orthographic projection of the second adhesive sub-layer 22 have an overlapping region.

"An orthographic projection of the first adhesive sub-layer 21 and an orthographic projection of the second adhesive sub-layer 22 having an overlapping region" means that, when observed along the thickness direction Z of the electrode assembly, the first adhesive sub-layer 21 and the second adhesive sub-layer 22 at least partially overlap.

In the above solution, the orthographic projection of the first adhesive sub-layer 21 and the orthographic projection of the second adhesive sub-layer 22 have an overlapping region, which can increase the bonding area between the adhesive layer 20 and the separator 13, and can also enhance the bonding effect of the inner turn of the wide, large, and thin electrode assembly 10.

Referring to FIG. 7, in one or more optional embodiments, the first adhesive sub-layer 21 includes a first portion 211 and a second portion 212 connected to each other, where the first portion 211 is disposed on the first straight segment 111, and the second portion 212 is disposed on the second bent segment 114; and the second adhesive sub-layer 22 includes a third portion 221 and a fourth portion 222 connected to each other, where the third portion 221 is disposed on the second straight segment 113, and the fourth portion 222 is disposed on the first bent segment 112.

The first portion 211 and the second portion 212 are two portions of the first adhesive sub-layer 21 distributed sequentially along the winding direction J.

The third portion 221 and the fourth portion 222 are two portions of the second adhesive sub-layer 22 distributed sequentially along the winding direction J.

In the above solution, the first portion 211 and the second portion 212 are connected to each other, the first portion 211 is located on the first straight segment 111, and the second portion 212 is located on the second bent segment 114, which can reduce the risk of brittle fracture of the first electrode sheet 11 at the second bent segment 114; and the third portion 221 and the fourth portion 222 are connected to each other, the third portion 221 is located on the second straight segment 113, and the fourth portion 222 is located on the first bent segment 112, which can reduce the risk of brittle fracture of the first electrode sheet 11 at the first bent segment 112.

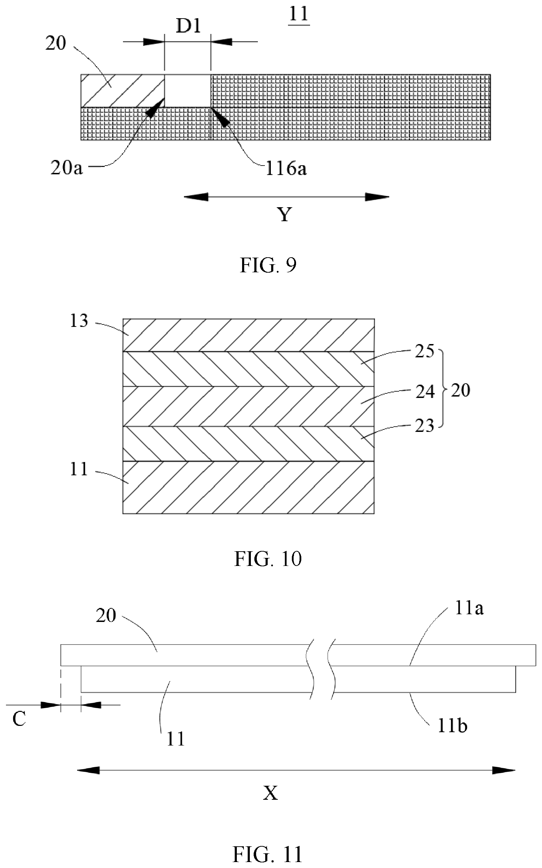

Referring to FIGs. 8 and 9, in one or more optional embodiments, the first electrode sheet 11 includes a single-sided region 115 and a double-sided region 116, where the single-sided region 115 is provided with an active material only on one side, the double-sided region 116 is provided with an active material on both sides, along the winding direction J, the single-sided region 115 and the double-sided region 116 are disposed sequentially, a trailing end of the adhesive layer 20 is a first end 20a, the double-sided region 116 includes a second end 116a connected to the single-sided region 115, and in an unfolded state of the first electrode sheet 11, along a length direction Y of the first electrode sheet, a distance between the first end 20a and the second end 116a is denoted as D1, meeting 0 ≤ D1 ≤ 2 mm.

The trailing end of the adhesive layer 20 is an end of the adhesive layer 20 away from the winding starting end P of the first electrode sheet along the winding direction J.

The single-sided region 115 and the double-sided region 116 are disposed sequentially along the winding direction J, and the second end 116a is the end of the double-sided region 116 connected to the single-sided region 115.

The adhesive layer 20 is disposed on the single-sided region 115 and extends toward the double-sided region 116 along the winding direction J.

Optionally, D1 may be, but is not limited to, 0, 0.25 mm, 0.5 mm, 0.75 mm, 1 mm, 1.25 mm, 1.5 mm, 1.75 mm, or 2 mm.

When D1 is 0, an end face of the first end 20a of the adhesive layer 20 is in contact with an end face of the active material of the double-sided region 116.

In the above solution, the distance between the first end 20a and the second end 116a meeting the above relationship can reduce the risk of the adhesive layer 20 overlapping with the active material of the double-sided region 116, thereby reducing the risk of lithium precipitation.

In one or more optional embodiments, a thickness of the adhesive layer 20 is 10 µm to 60 µm.

In an unfolded state of the first electrode sheet 11, a thickness direction of the adhesive layer 20 is parallel to a thickness direction of the first electrode sheet 11.

Optionally, the thickness of the adhesive layer 20 may be, but is not limited to, 10 µm, 15 µm, 20 µm, 25 µm, 30 µm, 35 µm, 40 µm, 45 µm, 50 µm, 55 µm, or 60 µm.

In the above solution, the thickness direction of the adhesive layer 20 is parallel to the thickness direction of the first electrode sheet 11, and the thickness of the adhesive layer 20 meeting the above relationship can reduce the probability of deformation of the innermost turn of the first electrode sheet 11, increase the pass rate of the narrow-side compression test, occupy less assembly space, and reduce the impact on energy density.

Referring to FIG. 10, in one or more optional embodiments, the adhesive layer 20 includes a pressure-sensitive adhesive layer 23, a substrate layer 24, and a hot-melt adhesive layer 25 sequentially distributed along a thickness direction of the adhesive layer 20, where the hot-melt adhesive layer 25 is connected to the separator 13, and the pressure-sensitive adhesive layer 23 is connected to the first electrode sheet 11.

The material of the substrate layer 24 may be polyethylene terephthalate.

The pressure-sensitive adhesive layer 23 may include hydrogenated styrene block copolymer, modified hydrogenated styrene block copolymer, hydrogenated petroleum resin, plasticizer, and antioxidant.

The hot-melt adhesive layer 25 includes hydrogenated styrene block copolymer, modified hydrogenated styrene block copolymer, hydrogenated petroleum resin, plasticizer, and antioxidant.

During the manufacturing process of the electrode assembly 10, the pressure-sensitive adhesive layer 23 of the adhesive layer 20 is applied to the first electrode sheet 11 to connect the pressure-sensitive adhesive layer 23 to the first electrode sheet 11, and then the first electrode sheet 11 with the adhesive layer 20 is fed for winding. After the winding of the electrode assembly 10 is completed, under high-temperature conditions, the hot-melt adhesive layer 25 of the adhesive layer 20 is connected to the inner separator 13.

In the above solution, the pressure-sensitive adhesive layer 23 is connected to the first electrode sheet 11, and the hot-melt adhesive layer 25 is connected to the separator 13, which can ensure firm connection between the first electrode sheet 11 and the separator 13, enhance the strength of the inner turn of the electrode assembly 10, and reduce the probability of deformation of the electrode assembly 10.

Referring to FIG. 11, in one or more optional embodiments, along a winding axis direction X of the electrode assembly, the adhesive layer 20 extends beyond an edge of the first electrode sheet 11, and a dimension C by which the adhesive layer 20 extends beyond the edge of the first electrode sheet 11 meets 0 ≤ C ≤ 0.75 mm.

The adhesive layer 20 extends beyond the edge of the first electrode sheet 11 along the winding axis direction X of the electrode assembly, enabling the adhesive layer 20 and the first electrode sheet 11 to have a larger bonding area, and ensuring that the adhesive layer 20 fully covers the first electrode sheet 11 in the winding axis direction X of the electrode assembly.

Optionally, C may be, but is not limited to, 0, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, or 0.75 mm.

In the above solution, the dimension by which the adhesive layer 20 extends beyond the edge of the first electrode sheet 11 meets the above range, which can not only fully cover the first electrode sheet 11 in the winding axis direction X of the electrode assembly to meet bonding requirements, but also reduce the impact on the assembly of the secondary battery 100.

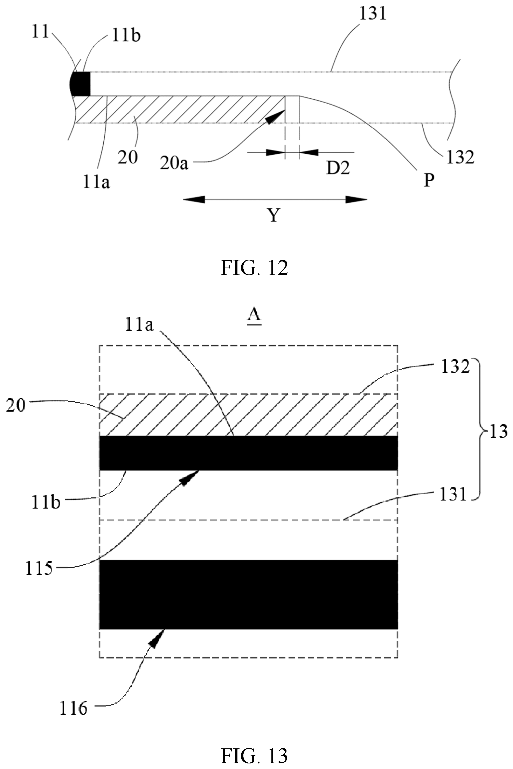

Referring to FIG. 12, in one or more optional embodiments, in an unfolded state of the first electrode sheet 11, along a length direction Y of the first electrode sheet, a distance between the adhesive layer 20 and a winding starting end P of the first electrode sheet is denoted as D2, meeting 1 mm ≤ D2 ≤ 2 mm.

Along the winding direction J, the leading end of the adhesive layer 20 is a third end 20b, and in an unfolded state of the first electrode sheet 11, along the length direction Y of the first electrode sheet, a distance between the third end 20b and the winding starting end P of the first electrode sheet is denoted as D2.

Optionally, D2 may be, but is not limited to, 1 mm, 1.1 mm, 1.2 mm, 1.3 mm, 1.4 mm, 1.5 mm, 1.6 mm, 1.7 mm, 1.8 mm, 1.9 mm, or 2 mm.

In the above solution, the distance between the adhesive layer 20 and the winding starting end P of the first electrode sheet meeting the above relationship facilitates feeding of the first electrode sheet 11 during winding of the electrode assembly 10 and can cover burrs at the winding starting end, improving the safety performance of the secondary battery 100.

Referring to FIG. 13, in one or more optional embodiments, the first electrode sheet 11 has a second surface 11b disposed opposite to the first surface 11a, the first electrode sheet 11 includes a single-sided region 115 and a double-sided region 116, the single-sided region 115 is provided with an active material only on the second surface 11b, the double-sided region 116 is provided with an active material on both the first surface 11a and the second surface 11b, along the winding direction J, the single-sided region 115 and the double-sided region 116 are disposed sequentially, the separator 13 includes a first separator 131 and a second separator 132, the first separator 131 is disposed facing the second surface 11b, the second separator 132 is disposed facing the first surface 11a, at least a portion of the adhesive layer 20 is disposed between the single-sided region 115 and the second separator 132, and the single-sided region 115 and the second separator 132 are bonded through the adhesive layer 20.

The first separator 131 and the second separator 132 are respectively disposed on both sides of the first electrode sheet 11 in the thickness direction. The first separator 131 is located on the side of the single-sided region 115 provided with an active material, the second separator 132 is located on the side of the single-sided region 115 not provided with an active material layer, and the adhesive layer 20 connects the single-sided region 115 and the second separator 132.

The adhesive layer 20 is a double-sided adhesive, with both sides in the thickness direction of the adhesive layer 20 bonding to the single-sided region 115 and the second separator 132, respectively.

In the above solution, at least a portion of the adhesive layer 20 is disposed between the single-sided region 115 and the second separator 132, and the single-sided region 115 and the second separator 132 are bonded through the adhesive layer 20, which contributes to enhancing the strength of the inner turn of the electrode assembly 10, reducing the probability of deformation of the electrode assembly 10, and increasing the pass rate of the narrow-side compression test.

In one or more optional embodiments, a winding starting end of the first separator 131 and a winding starting end of the second separator 132 are both bent structures.

As shown in FIG. 8, the winding starting end of the first separator 131 and the winding starting end of the second separator 132 are both bent toward the winding starting end P of the first electrode sheet, so that bent structures are formed at the winding starting end of the first separator 131 and the winding starting end of the second separator 132.

In the above solution, the winding starting end of the first separator 131 and the winding starting end of the second separator 132 are both bent structures, which facilitates clamping by a winding needle during winding of the electrode assembly 10.

Referring to FIGs. 1 and 2, in one or more optional embodiments, the secondary battery 100 further includes a packaging pouch 30, and the electrode assembly 10 is accommodated within the packaging pouch 30.

The electrode assembly 10 is accommodated within the packaging pouch 30, so that the secondary battery is a pouch-type battery.

The packaging pouch 30 may include, but is not limited to, aluminum-plastic film or aluminum shell.

In the above solution, the electrode assembly 10 is accommodated within the packaging pouch 30, which can protect the electrode assembly 10, and a wall thickness of the packaging pouch 30 can be relatively thin, enabling the secondary battery 100 to have a higher energy density.

According to some embodiments of the present application, an embodiment of the present application further provides an electrochemical device including the secondary battery 100 according to any one of the above embodiments.

According to some embodiments of the present application, an embodiment of the present application further provides an electrical apparatus including the electrochemical device according to any one of the above embodiments.

The electrical apparatus may be, but is not limited to, a mobile phone or a smart wearable device.

In some embodiments of the present application, the secondary battery (100) is taken as an example for conducting a narrow-side compression test.

### Preparation of secondary battery 100:

### Example 1

(1) Preparation of negative electrode sheet: Graphite was used as the negative electrode active material. The negative electrode active material graphite, a binder styrene-butadiene rubber (SBR), and a thickener sodium carboxymethyl cellulose (CMC) were mixed at a weight ratio of 96:2:2. Deionized water was added as a solvent to prepare a slurry with a solid content of 70wt%, and the mixture was stirred uniformly. The slurry was evenly applied on one surface of a copper foil of 10 µm thick and dried, yielding a negative electrode sheet with a single-sided negative electrode active layer. The above steps were repeated on the other surface of the copper foil to obtain a negative electrode sheet with double-sided negative electrode active layers. The area S2 of the single-sided region of this negative electrode sheet was 333.5 mm².
(2) Preparation of positive electrode sheet: A positive electrode active material lithium cobalt oxide (LiCoO₂), a conductive carbon black (Super P), and polyvinylidene fluoride (PVDF) were mixed at a weight ratio of 97.5:1.0:1.5. N-methylpyrrolidone (NMP) was added as a solvent to prepare a slurry with a solid content of 75wt%, and the mixture was stirred uniformly. The slurry was evenly applied on one surface of an aluminum foil of 12 µm thick and dried, yielding a positive electrode sheet with a single-sided positive electrode active layer. The above steps were repeated on the other surface of the aluminum foil to get a positive electrode sheet with double-sided positive electrode active layers.
(3) Preparation of electrolyte: In a dry argon atmosphere, ethylene carbonate (EC), ethyl methyl carbonate (EMC), and diethyl carbonate (DEC) were first mixed at a mass ratio of EC:EMC:DEC = 30:50:20 to prepare a base organic solvent. Then, a lithium salt lithium hexafluorophosphate (LiPF₆) was added to the base organic solvent, dissolved, and mixed uniformly. An electrolyte with a LiPF₆ mass concentration of 12.5% was thus obtained.
(4) Preparation of separator: A polyethylene porous film was used as the substrate layer. A ceramic layer (containing alumina ceramic and PVDF binder) was coated on one surface of the substrate layer to serve as a coated ceramic separator (CCS). The mass percentage of alumina ceramic in the ceramic layer was 95%.
(5) Preparation of adhesive layer: Styrene-isoprene-styrene block copolymer (SIS, weight-average molecular weight: 100,000), functional resin ethylene-vinyl acetate copolymer (EVA, weight-average molecular weight: 120,000), an additive (titanium dioxide), and antioxidant (diphenylamine) were mixed uniformly at a mass ratio of 70:20:5:5. The mixture was heated to 150°C for hot melting, then applied on one surface of a substrate layer polyethylene terephthalate (PET) film of 8 µm thick. It was dried at 120°C to form a first adhesive layer of 8 µm thick. Polyacrylic acid (PAA) was applied on the other surface of the substrate layer and dried at 80°C to form a second adhesive layer of 4 µm thick. Finally, an adhesive member including the first adhesive layer, substrate layer, and second adhesive layer stacked in sequence was obtained.
(6) Preparation of electrode assembly: Nickel sheets and aluminum sheets with a thickness T of 0.16 mm were selected as metal strips. The aluminum strip was welded to the positive electrode sheet (aluminum foil of the positive electrode sheet), and the nickel strip was welded to the negative electrode sheet (copper foil of the negative electrode sheet). The adhesive layer was bonded to the negative electrode sheet, covering a single-sided region area S1 of 166.8 mm². The positive electrode sheet, separator, and negative electrode sheet were stacked and wound to form an electrode assembly for subsequent assembly.
(7) Assembly of electrode assembly: A punched aluminum-plastic film was placed in an assembly fixture with the pit facing upward, the electrode assembly was placed in the pit, and external force was applied to press it tightly. Then, another punched aluminum-plastic film with the pit facing downward was placed over the electrode assembly, and the four sides of the two aluminum-plastic films were heat-sealed to obtain an assembled electrode assembly.
(8) Electrolyte injection and encapsulation: The assembled electrode assembly was injected with electrolyte, and after vacuum encapsulation, resting, hot-pressing formation, and shaping processes, a lithium-ion battery was obtained with dimensions of 29.3 mm in length, 7.65 mm in thickness, and 15.9 mm in width.

### Example 2

The difference from Example 1 was that the bonding area S1 was 222.3 mm².

### Example 3

The difference from Example 1 was that the bonding area S1 was 250.1 mm².

### Example 4

The difference from Example 1 was that the bonding area S1 was 266.8 mm².

### Example 5

The difference from Example 1 was that the bonding area S1 was 300.2 mm².

### Example 6

The difference from Example 1 was that the bonding area S1 was 333.5 mm².

### Example 7

The difference from Example 1 was that the bonding area S1 was 111.2 mm².

The method for the narrow-side compression test mentioned in the present application is as follows: In a test environment at 25±5°C, the secondary battery 100 is placed between two flat plates, with the narrow side of the secondary battery 100 parallel to the two flat plates, a compression force of 13±1 kN is applied, with a compression speed of 15 mm/s, and the test shall be terminated when one of the following conditions is met: (1) the compression force reaches the set value of 13±1 kN; (2) the voltage drop reaches 100 mV; and (3) the cell deformation rate exceeds 50%. During the test, if the secondary battery 100 does not catch fire or explode, it indicates that the secondary battery 100 passes the narrow-side compression test.

The secondary batteries 100 of Examples 1 to 7 above were subjected to the narrow-side compression test, with specific test data as follows:

**Table 1**

| Test item | S1 (mm²) | S2 (mm²) | S1/S2 | Narrow-side compression test pass rate |
|---|---|---|---|---|
| Example 1 | 166.8 | 333.5 | 1/2 | 7/10 Pass |
| Example 2 | 222.3 | 333.5 | 2/3 | 9/10 Pass |
| Example 3 | 250.1 | 333.5 | 3/4 | 10/10 Pass |
| Example 4 | 266.8 | 333.5 | 4/5 | 10/10 Pass |
| Example 5 | 300.2 | 333.5 | 9/10 | 10/10 Pass |
| Example 6 | 333.5 | 333.5 | 1 | 10/10 Pass |
| Example 7 | 111.2 | 333.5 | 1/3 | 3/10 Pass |

According to Table 1 above, with reference to Examples 1 to 7, it can be seen that if S1/S2 is too small, the bonding area between the adhesive layer and the first single-sided region is too small, and the strength of the first single-sided region is insufficient to resist deformation of the electrode assembly; if S1/S2 is too large, energy density is lost. Therefore, in some embodiments of the present application, S1/S2 may be selected to be 1/2 to 1, preferably 2/3 to 1, thereby reducing the probability of deformation of the electrode assembly and effectively increasing the narrow-side compression pass rate of the lithium-ion battery.

Although the present application has been described with reference to preferred embodiments, various improvements can be made thereto, and components therein can be replaced with equivalents without departing from the scope of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A secondary battery comprising an electrode assembly the electrode assembly being a flat wound structure, the electrode assembly comprising a first electrode sheet a second electrode sheet and a separator wherein the separator is disposed between the first electrode sheet and the second electrode sheet and an innermost electrode sheet of the electrode assembly is the first electrode sheet
wherein a length of the electrode assembly is denoted as L, a width of the electrode assembly is denoted as W, a thickness of the electrode assembly is denoted as H, meeting 0.9 ≤ L/W ≤ 1.1 and H ≤ 3 mm, the electrode assembly further comprises an adhesive layer an innermost turn of the first electrode sheet comprises a first straight segment a first bent segment a second straight segment and a second bent segment connected sequentially, the first electrode sheet has a first surface facing a winding core of the electrode assembly and at least a portion of the adhesive layer is disposed on the first surface of the first straight segment and/or the first surface of the second straight segment

2. The secondary battery according to claim 1, wherein the first electrode sheet has a second surface disposed opposite to the first surface the first electrode sheet comprises a single-sided region and a double-sided region the single-sided region is provided with an active material only on the second surface the double-sided region is provided with an active material on both the first surface and the second surface along a winding direction the single-sided region and the double-sided region are disposed sequentially, the single-sided region comprises a first single-sided region the first single-sided region is located at the innermost turn of the first electrode sheet and at least a portion of the adhesive layer is disposed on the first surface of the first single-sided region

3. The secondary battery according to claim 2, wherein an area of the first single-sided region covered by the adhesive layer is denoted as S1, an area of the first single-sided region is denoted as S2, and 1/2 ≤ S1/S2 ≤ 1.

4. The secondary battery according to claim 3, wherein 2/3 ≤ S1/S2 ≤ 1.

5. The secondary battery according to claim 1, wherein along a thickness direction of the electrode assembly an orthographic projection of the adhesive layer covers the entire second straight segment

6. The secondary battery according to claim 5, wherein a portion of the adhesive layer is disposed on the first bent segment and/or the second bent segment

7. The secondary battery according to claim 5, wherein at least a portion of the adhesive layer is disposed on the first straight segment the first bent segment the second straight segment and the second bent segment

8. The secondary battery according to claim 5, wherein
the adhesive layer comprises a first adhesive sub-layer and a second adhesive sub-layer spaced apart along a winding direction wherein at least a portion of the first adhesive sub-layer is disposed on the first straight segment and at least a portion of the second adhesive sub-layer is disposed on the second straight segment

9. The secondary battery according to claim 8, wherein along the thickness direction of the electrode assembly an orthographic projection of the first adhesive sub-layer and an orthographic projection of the second adhesive sub-layer have an overlapping region.

10. The secondary battery according to claim 8, wherein the first adhesive sub-layer comprises a first portion and a second portion connected to each other, wherein the first portion is disposed on the first straight segment and the second portion is disposed on the second bent segment and
the second adhesive sub-layer comprises a third portion and a fourth portion connected to each other, wherein the third portion is disposed on the second straight segment and the fourth portion is disposed on the first bent segment

11. The secondary battery according to claim 1, wherein the first electrode sheet comprises a single-sided region and a double-sided region wherein the single-sided region is provided with an active material only on one side, the double-sided region is provided with an active material on both sides, along a winding direction the single-sided region and the double-sided region are disposed sequentially, a trailing end of the adhesive layer is a first end the double-sided region comprises a second end connected to the single-sided region and in an unfolded state of the first electrode sheet along a length direction of the first electrode sheet a distance between the first end and the second end is denoted as D1, meeting 0 ≤ D1 ≤ 2 mm.

12. The secondary battery according to claim 1, wherein a thickness of the adhesive layer is 10 µm to 60 µm.

13. The secondary battery according to claim 1, wherein the adhesive layer comprises a pressure-sensitive adhesive layer a substrate layer and a hot-melt adhesive layer sequentially distributed along a thickness direction of the adhesive layer wherein the hot-melt adhesive layer is connected to the separator and the pressure-sensitive adhesive layer is connected to the first electrode sheet

14. The secondary battery according to claim 1, wherein along a winding axis direction of the electrode assembly the adhesive layer extends beyond an edge of the first electrode sheet and a dimension C by which the adhesive layer extends beyond the edge of the first electrode sheet meets 0 ≤ C ≤ 0.75 mm.

15. The secondary battery according to claim 1, wherein in an unfolded state of the first electrode sheet along a length direction of the first electrode sheet a distance between the adhesive layer and a winding starting end of the first electrode sheet is denoted as D2, meeting 1 mm ≤ D2 ≤ 2 mm.

16. The secondary battery according to claim 1, wherein the first electrode sheet has a second surface disposed opposite to the first surface the first electrode sheet comprises a single-sided region and a double-sided region the single-sided region is provided with an active material only on the second surface the double-sided region is provided with an active material on both the first surface and the second surface along the winding direction the single-sided region and the double-sided region are disposed sequentially, the separator comprises a first separator and a second separator the first separator is disposed facing the second surface the second separator is disposed facing the first surface at least a portion of the adhesive layer is disposed between the single-sided region and the second separator and the single-sided region and the second separator are bonded through the adhesive layer

17. The secondary battery according to claim 16, wherein a winding starting end of the first separator and a winding starting end of the second separator are both bent structures.

18. The secondary battery according to claim 1, wherein L ≥ 65 mm, and W ≥ 65 mm.

19. An electrochemical device, comprising the secondary battery according to any one of claims 1 to 18.
